**Europäisches Patentamt**

**European Patent Office**

**Office européen des brevets**

(19)

(11) Veröffentlichungsnummer: **0 213 115**
**A1**

(12)

# EUROPÄISCHE PATENTANMELDUNG

(21) Anmeldenummer: 86890227.1

(22) Anmeldetag: 12.08.86

(51) Int. Cl.⁴: **B 62 M 1/10**

---

(30) Priorität: 12.08.85 AT 2350/85

(43) Veröffentlichungstag der Anmeldung: 04.03.87
Patentblatt 87/10

(84) Benannte Vertragsstaaten: **AT BE CH DE FR GB IT LI LU NL SE**

(71) Anmelder: **BAUMANN, Ernst, Baumgasse 29-41/62/5, A-1030 Wien (AT)**

(72) Erfinder: **BAUMANN, Ernst, Baumgasse 29-41/62/5, A-1030 Wien (AT)**

(74) Vertreter: **Berger, Erhard, Dr., Siebensterngasse 39 Postfach 306, A-1071 Wien (AT)**

---

(54) **Tretkurbelgetriebe.**

(57) Mit einem Tretkurbelgetriebe, bei dem das Kettenrad (2) gegenüber der Kurbel (1) schwenkbar gelagert und mittels wenigstens einer Feder federnd gekuppelt ist, sollen ungleichmäßige dynamische Kräfte so übertragen werden, daß ein Teil der auf die Kurbel (1) ausgeübten Spitzenkraft durch Anspannen wenigstens einer Feder (4) gespeichert wird, wobei sich das federnd gekuppelte Kettenrad (2) langsamer dreht als die Kurbel (1) und daß die gespeicherte Kraft durch Entspannung der Feder (4) von dieser abgegeben und auf das Kettenrad (2) übertragen wird, wobei sich das Kettenrad (2) schneller dreht als die Kurbel (1).

Zu diesem Zweck ist wenigstens ein die Kurbel (1) und das Kettenrad (2) federkraftschlüssig kuppelnder Federbügel (4) vorgesehen, der unmittelbar oder mit Abstand an wenigstens eine Federeinspannung (7) anschließend an wenigstens einem Abstützorgan (5) des Kettenrades (2) und/oder der Kurbel (1) federnd abgestützt ist und von der vorgegebenen Abstützung ausgehend wenigstens über eine gewisse Strecke einen zunehmenden Abstand von der Abstützfläche (6) des Abstützorganes (5) aufweist.

- 1 -

0213115

Die Erfindung betrifft ein Tretkurbelgetriebe, bei dem das Kettenrad gegenüber der Kurbel schwenkbar gelagert und mittels wenigstens einer Feder federnd gekuppelt ist.

Tretkurbelgetriebe mit Kettenrädern, die mit der Kurbel federnd gekuppelt sind, sind bekannt und vor allem in diversen Patentschriften veröffentlicht.

Die bekannten Tretkurbelgetriebe haben den Nachteil, daß die Kupplungen Kupplungsfedern aufweisen, die auf Grund ihrer Konstruktionsart groß dimensioniert sein müssen, damit die notwendige Federkraft erreicht wird. Außerdem ist bei den bekannten, federnde Kupplungen aufweisenden Tretkurbelgetrieben der Verlauf der Energiespeicherung und -abgabe unbefriedigend.

Erfindungsgemäß werden diese Nachteile dadurch vermieden, daß wenigstens ein die Kurbel mit dem Kettenrad federkraftschlüssig kuppelnder Federbügel angeordnet ist, der unmittelbar oder mit Abstand an wenigstens eine Federeinspannung anschließend an wenigstens einem Abstützorgan des Kettenrades und/oder der Kurbel federnd abgestützt ist und von der vorgegebenen Abstützung ausgehend wenigstens über eine gewisse Strecke einen zunehmenden Abstand von der Abstützfläche des Abstützorganes aufweist.

Mit dem erfindungsgemäßen Tretkurbelgetriebe werden ungleichmäßige dynamische Kräfte so übertragen, daß ein Teil der auf die Kurbel ausgeübten Spitzenkraft durch Anspannen wenigstens einer Feder gespeichert wird, wobei sich das federnd gekuppelte Kettenrad langsamer dreht als die Kurbel und daß die gespeicherte Kraft durch relative Entspannung der Feder von dieser abgegeben und auf das Kettenrad übertragen wird, wobei sich das Kettenrad schneller dreht als die Kurbel.

Dadurch wird bei einem Tretkurbelgetriebe der sogenannte tote Punkt, beispielsweise bei im wesentlichen senkrechter Stellung der Kurbel eines Fahrrades, besser überbrückt.

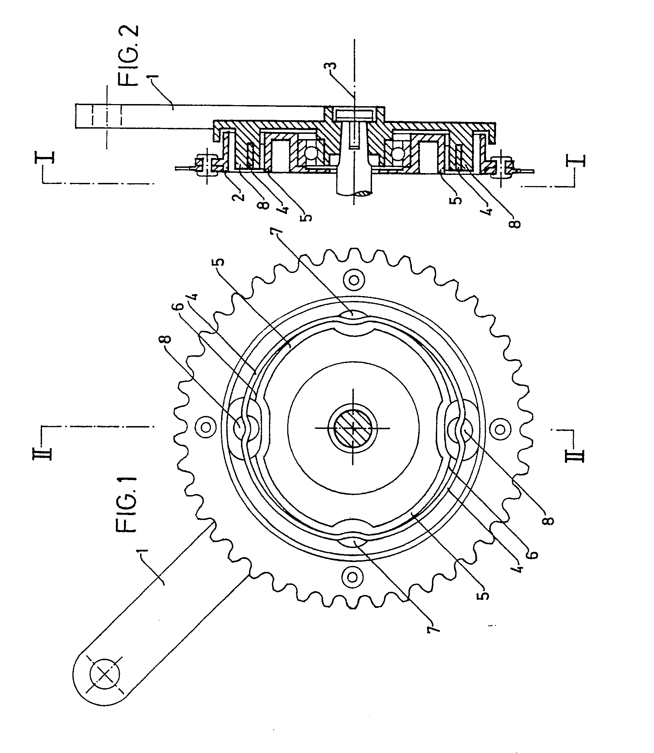

An Hand der Zeichnungen sind weitere Merkmale der Erfindung beschrieben. Fig. 1 zeigt in der Seitenansicht bzw. im durch die Getriebeachse gehenden Schnitt I-I ein erfindungsgemäßes Tretkurbelgetriebe.

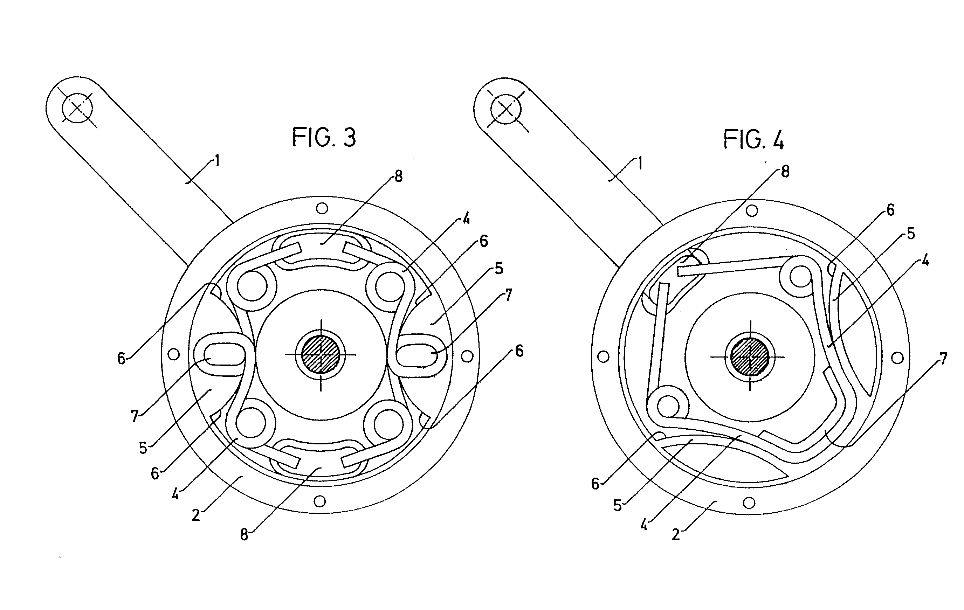

Fig. 2 zeigt das gleiche Tretkurbelgetriebe im Schnitt II-II. Fig. 3 zeigt in der Seitenansicht ein Tretkurbelgetriebe, bei dem der die Zähne auf-

- 2 -

0213115

weisende Teil des Kettenrades weggelassen ist. Fig. 4 zeigt in der Seitenansicht ein Tretkurbelgetriebe, bei dem der die Zähne aufweisende Teil
des Kettenrades weggelassen ist, mit einem einstückigen Federbügel.

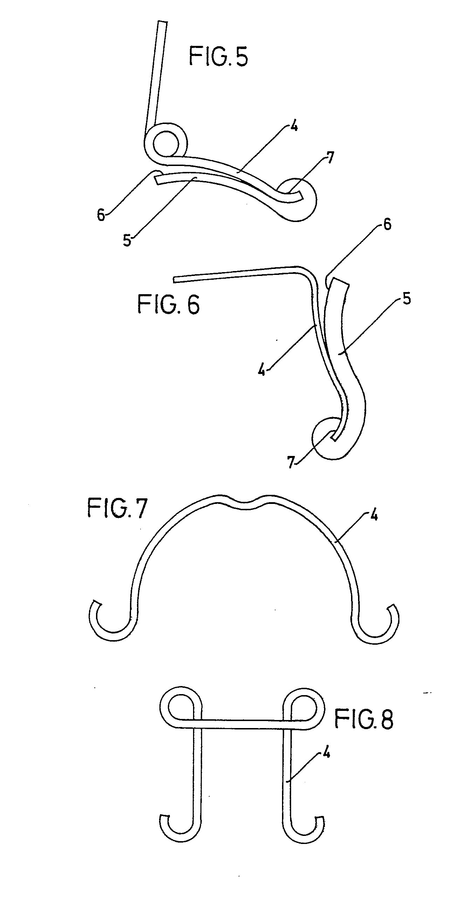

Fig. 5 zeigt einen Federbügel, der ein Gelenk in Form einer Wendel aufweist, von dem Federschenkel ausgehen. Fig. 6 zeigt einen Federbügel
aus Flachmaterial. Fig. 7 zeigt einen im wesentlichen U-förmigen Federbügel. Fig. 8 zeigt einen Federbügel mit zwei Schlingen.

Gemäß den dargestellten Figuren ist mit 1 die Kurbel des Tretkurbelgetriebes bezeichnet, die gegenüber dem Kettenrad 2 um die Schwenkachse
3 schwenkbar gelagert ist. Die Schwenkachse 3 liegt in der Getriebeachse.

Mit 4 ist ein Federbügel bezeichnet. Der Federbügel 4 ist an wenigstens einem Abstützorgan 5 abgestützt bzw. abstützbar angeordnet, das
eine Abstützfläche 6, gegebenenfalls mehrere Abstützflächen 6 aufweist.
Mit 7 ist eine Einspannung bzw. Einspannbasis für den Federbügel 4 bezeichnet, an die unmittelbar oder mit Abstand die Abstützfläche 6 des
Abstützorganes 5 anschließt. Mit 8 ist ein Ankerorgan oder dgl. der Kurbel 1 und/oder des Kettenrades 2 bezeichnet, an dem der Federbügel 4
verankert bzw. abgestützt ist.

Vorzugsweise ist der Federbügel 4 federnd vorgespannt an wenigstens
einer Abstützfläche 6 wenigstens eines Abstützorganes 5 abgestützt bzw.
abstützbar angeordnet.

Um möglichst weiche Übergänge zwischen Spannen und Entspannen des
Federbügels 4 zu erreichen, können ein oder mehrere Federbügel 4 in entgegengesetzte Schwenkrichtungen wirkend federnd vorgespannt an Abstützflächen 6 eines oder mehrerer Abstützorgane 5 abgestützt bzw. abstützbar angeordnet sein.

Gemäß den in den Zeichnungen dargestellten Ausführungsbeispielen ist
der Federbügel 4 an wenigstens einem Abstützorgan 5 des Kettenrades 2
abgestützt bzw. abstützbar angeordnet und an wenigstens einem Ankerorgan 8 oder dgl. der Kurbel 1 verankert bzw. abgestützt.

Wie insbesondere Fig. 2 zeigt, ist der Federbügel 4 an wenigstens einem
im wesentlichen in der Ebene des Kettenrades 2 befindlichen Abstützorgan 5 abgestützt bzw. abstützbar angeordnet.

Der Federbügel 4 ist an wenigstens einem in die Ebene des Kettenrades 2 ragenden Ankerorgan 8 der Kurbel 1 verankert bzw. abgestützt.

Wird auf die Kurbel 1 Tretkraft ausgeübt, wird mittels des Ankerorganes 8 der Federbügel 4 in eine Schwenkrichtung gedrückt bzw. gezogen, wobei bei entsprechendem Widerstand durch das Kettenrad 2 der Federbügel 4 angespannt wird und sich mit fortschreitender Einnahme der Abstützfläche 6 des Abstützorganes 5 immer stärker an diesem abstützt.

Da dabei gleichzeitig der federnde Hebelarm des Federbügels 4 verkürzt wird, nimmt der Federwiderstand progressiv zu.

Das ist ein wesentlicher angestrebter Effekt der erfindungsgemäßen Federbügelanordnung.

Die zur Abstützung an der Abstützfläche 6 des Abstützorganes 5 bestimmte Zone des Federbügels 4 kann im entspannten Zustand gerade sein. Solche Federbügel 4 sind vorzugsweise an wenigstens einem Abstützorgan 5 mit konvex ausgebildeter, im wesentlichen bogenförmiger Abstützfläche 6 abgestützt bzw. abstützbar angeordnet.

Die zur Abstützung an der Abstützfläche 6 des Abstützorganes 5 bestimmte Zone des Federbügels 4 kann im entspanntem Zustand auch in Richtung Abstützfläche 6 konvex gebogen ausgebildet sein. In diesem Fall kann die Abstützfläche 6 des Abstützorganes 5 gegebenenfalls auch gerade sein.

Um ein optimales Zusammenwirken zwischen Federbügel 4 und Abstützfläche 6 zu erreichen, kann der Federbügel 4 wenigstens ein Gelenk in Form wenigstens einer Wendel und/oder Schlinge aufweisen, wie die Figuren 3-5 zeigen.

Von der Wendel bzw. Schlinge des Federbügels 4 gehen Federschenkel aus, von denen wenigstens einer mit der Abstützfläche 6 des Abstützorganes 5 direkt zusammenwirkt.

Im Hinblick auf das dynamische Gleichgewicht des Getriebes können wenigstens zwei Federbügel 4, vorzugsweise beiderseits der Schwenkachse 3 an einander gegenüberliegenden Stellen angeordnet sein, wie beispielsweise Fig. 3 zeigt. Gemäß Fig. 3 sind die Federbügel 4 spiegelverkehrt zueinander angeordnet.

Selbstverständlich können auch andere oder zusätzliche Maßnahmen zur Vermeidung einer Unwucht getroffen werden.

Der Federbügel 4 gemäß Fig. 1 weist im Ganzen eine symmetrische Form auf. Er kann beispielsweise aus einem spiralenförmig gewickelten Bandmaterial bestehen und solcherart mehrschichtig ausgebildet sein.

- 4 -

0213115

Vorzugsweise ist der Federbügel 4 aus Rundmaterial oder Bandmaterial geformt.

Zur Differenzierung der Federwirkung kann der Federbügel 4 unterschiedlich breite und/oder dicke, vorzugsweise konisch ausgebildete Zonen aufweisen.

Da im Bereich der gegenseitigen Abstützung große Kräfte, gegebenenfalls Reibungskräfte, wirksam werden, kann der Federbügel 4 an einer Abstützfläche 6 abgestützt bzw. abstützbar angeordnet sein, die aus härterem Material besteht als die Kurbel 1 bzw. das Kettenrad 2.

Es können beispielsweise Abstützorgane 5 eingesetzt sein, die aus härterem Material bestehen als das Kettenrad 2 und/oder die Kurbel 1.

Selbstverständlich ist die Erfindung nicht auf die in den Zeichnungen dargestellten Ausführungsbeispiele beschränkt.

Das Abstützorgan 5 kann als Anspannorgan zum Vorspannen des Federbügels 4 ausgebildet sein.

Beispielsweise kann das die Abstützfläche 6 aufweisende Abstützorgan 5 gegen den Federbügel 4 drückbar und in entsprechender Lage fixierbar, gegebenenfalls nachstellbar ausgebildet bzw. angeordnet sein.

Das kann beispielsweise mittels einer oder mehrerer Schrauben, Stiften, Exzenterstiften, Keilen oder dgl. bewirkt werden.

Auch das Ankerorgan 8 kann als Anspannorgan zum Vorspannen des Federbügels 4 ausgebildet sein. In diesem Fall wird bei Vorspannen die zur Abstützung vorgesehene Zone des Federbügels 4 in Richtung Abstützfläche 6 des Abstützorganes 5 gedrückt bzw. gezogen und in relativer Vorspannung fixiert.

Als Vorspannmittel können Schrauben, Stifte, Keile und dgl. eingesetzt werden.

Der Federbügel 4 kann beispielsweise einerseits an wenigstens einem Abstützorgan 5 der Kurbel 1, anderseits an wenigstens einem Abstützorgan 5 des Kettenrades 2 abgestützt bzw. abstützbar angeordnet sein.

Bei einer solchen Federbügelanordnung erreicht man einen großen, im wesentlichen doppelten Federweg.

Der Federbügel 4 kann einen runden, beispielsweise kreisrunden, einen ovalen, einen quadratischen, einen rechteckigen, einen dreieckigen und dgl. Querschnitt aufweisen.

Gemäß Fig. 1 ist der Federbügel 4 einstückig.

Die Federkupplung kann aber beispielsweise auch zwei oder vier spiegelverkehrt zueinander angeordnete Federbügel 4 aufweisen. Fig. 7 zeigt einen für eine doppelte Anordnung ausgebildeten Federbügel 4.

Selbstverständlich können diverse Befestigungsorgane wie Schrauben, Klemmen, Stifte oder dgl. zur Befestigung bzw. Verankerung bzw. Abstützung des Federbügels 4 vorgesehen sein.

Es können diverse Vorspannorgane wie Schrauben, Spannstifte, Keile und dgl. angeordnet sein.

Die Federbügel 4 können zu ihrer Verankerung an der Kurbel 1 und/oder dem Kettenrad 2 Umbiegungen, Wendeln, Schlingen, Wellen und dgl. aufweisen.

Die Federbügel 4 können beispielsweise im wesentlichen S-förmig ausgebildet sein.

Das Abstützorgan 5 kann im wesentlichen eine gekrümmte Feder mit konvexer Abstützfläche 6 sein.

Es können Organe vorgesehen sein, mittels der die Krümmung der als Abstützorgan 5 eingesetzten Feder verstärkbar und dadurch die konvexe Krümmung der Abstützfläche 6 ebenfalls verstärkbar ist.

Dazu können Schrauben, Stifte, Exzenterstifte, Keile und dgl. vorgesehen sein, die direkt oder indirekt an bestimmter Stelle bzw. Stellen der als Abstützorgan 5 ausgebildeten Feder angreifen und deren Krümmung herstellen bzw. verstärken.

Mittels dieser Einrichtung kann der Federbügel 4 vorgespannt bzw. nachgespannt werden.

Eine als Abstützorgan 5 ausgebildete bzw. angeordnete Feder kann beispielsweise eine Flachbandfeder sein, die ein- oder mehrstückig bzw. ein- oder mehrschichtig ausgebildet ist.

Die Anspanneinrichtung in Form von Schrauben, Stiften, Exzenterstiften, Keilen und dgl. kann beispielsweise am Ende bzw. an den Enden der als Abstützorgan 5 eingesetzten Feder angreifen, wobei die Krümmung der Abstützfläche 6 dadurch hergestellt wird, das der Abstand der Enden der als Abstützorgan 5 eingesetzten Feder zueinander verkleinert wird.

Es kann auch wenigstens ein im wesentlichen in der Mitte des aus wenigstens einer Feder bestehenden Abstützorganes 5 angreifendes Anspannorgan vorgesehen sein, mittels dem die Biegung verstärkbar ist.

Die Abstützfläche 6 des Abstützorganes 5 kann im wesentlichen glatt sein, wie die dargestellten Figuren zeigen. Sie kann aber auch gewellt, geriffelt, gezahnt oder dgl. ausgebildet sein, sodaß sich der Federbügel 4 nur abschnitts- bzw. punktweise an der Abstützfläche 6 des Abstützorganes 5 abstützt.

Die Abstützfläche 6 des Abstützorganes 5 kann auch längsprofiliert ausgebildet sein.

Dadurch kann die abgestützte bzw. die zur Abstützung bestimmte Zone des Federbügels 4 exakt gehalten bzw. geführt werden.

Das Abstützorgan 5 kann auch in Form eines in sich geschlossenen ringförmigen Federbügels ausgebildet sein.

Das Abstützorgan 5 kann selbstverständlich auch aus starren Einzelteilen bestehend beweglich, beispielsweise gelenkig gelagert, angeordnet sein, sodaß der Bogenstich der Abstützfläche 6 vergrößerbar ist.

Das Kettenrad 2 soll gegenüber der Kurbel 1 möglichst reibungsarm schwenkbar gelagert sein.

Zu diesem Zweck ist gemäß Fig. 2 ein Kugellager angeordnet. Es kann aber beispielsweise auch ein Nadellager bzw. ein Nadelkugellager, Rollenlager oder Gleitlager angeordnet sein.

In den Zeichnungen ist nur gemäß den Figuren 1 und 2 das Kettenrad 2 mit einem Zahnblatt versehen dargestellt. Bei den anderen Figuren wurde das Kettenrad ohne Zahnblatt gezeichnet.

Selbstverständlich kann das Kettenrad 2 auch zwei oder drei unterschiedlich große Zahnblätter aufweisen, sodaß sehr differenzierte Übersetzungen möglich sind.

Das Kettenrad 2 kann im wesentlichen auch im Ganzen hergestellt die Zähne für die Antriebskette aufweisen.

Selbstverständlich kann auch die Kurbel 1 anders als in den Zeichnungen dargestellt ausgebildet sein.

Sie kann aus Gewichtseinsparungsgründen wesentlich differenzierter ausgebildet sein.

Patentansprüche :

1. Tretkurbelgetriebe, bei dem das Kettenrad gegenüber der Kurbel schwenkbar gelagert und mittels wenigstens einer Feder federnd gekuppelt ist, dadurch gekennzeichnet, daß wenigstens ein die Kurbel (1) mit dem Kettenrad (2) federkraftschlüssig kuppelnder Federbügel (4) angeordnet ist, der unmittelbar oder mit Abstand an wenigstens eine Federeinspannung (7) anschließend an wenigstens einem Abstützorgan (5) des Kettenrades (2) und/oder der Kurbel (1) federnd abgestützt ist und von der vorgegebenen Abstützung ausgehend wenigstens über eine gewisse Strecke einen zunehmenden Abstand von der Abstützfläche (6) des Abstützorganes (5) aufweist.

2. Tretkurbelgetriebe nach Anspruch 1, dadurch gekennzeichnet, daß der Federbügel (4) federnd vorgespannt an wenigstens einer Abstützfläche (6) wenigstens eines Abstützorganes (5) abgestützt bzw. abstützbar angeordnet ist.

3. Tretkurbelgetriebe nach Anspruch 1 oder 2, dadurch gekennzeichnet, daß ein oder mehrere Federbügel (4) in entgegengesetzte Schwenkrichtungen wirkend federnd vorgespannt an Abstützflächen (6) eines oder mehrerer Abstützorgane (5) abgestützt bzw. abstützbar angeordnet ist bzw. sind.

4. Tretkurbelgetriebe nach einem der Ansprüche 1-3, dadurch gekennzeichnet, daß der Federbügel (4) an wenigstens einem Abstützorgan (5) des Kettenrades (2) oder der Kurbel (1) abgestützt bzw. abstützbar angeordnet und an wenigstens einem Ankerorgan (8) oder dgl. der Kurbel (1) oder des Kettenrades (2) verankert bzw. abgestützt ist.

5. Tretkurbelgetriebe nach einem der Ansprüche 1-4, dadurch gekennzeichnet, daß der Federbügel (4) an wenigstens einem im wesentlichen in der Ebene des Kettenrades (2) befindlichen Abstützorgan (5) abgestützt bzw. abstützbar angeordnet ist.

6. Tretkurbelgetriebe nach einem der Ansprüche 1-5, dadurch gekennzeichnet, daß der Federbügel (4) an wenigstens einem in die Ebene des Kettenrades (2) ragenden Ankerorgan (8) der Kurbel (1) verankert bzw. abgestützt ist.

7. Tretkurbelgetriebe nach einem der Ansprüche 1-6, dadurch gekennzeichnet, daß der Federbügel (4) oder dgl. wenigstens ein Gelenk in Form wenigstens einer Wendel oder Schlinge aufweist.

8. Tretkurbelgetriebe nach einem der Ansprüche 1-7, dadurch gekenn-

- 8 -

0213115

zeichnet, daß der Federbügel (4) wenigstens eine Wendel und/oder Schlinge aufweist, von der Federschenkel ausgehen.

9. Tretkurbelgetriebe nach einem der Ansprüche 1-8, dadurch gekennzeichnet, daß wenigstens zwei Federbügel (4), vorzugsweise beiderseits der Schwenkachse (3) an einander gegenüberliegenden Stellen angeordnet sind.

10. Tretkurbelgetriebe nach einem der Ansprüche 1-9, dadurch gekennzeichnet, daß der Federbügel (4) wenigstens zonenweise mehrschichtig ausgebildet ist.

11. Tretkurbelgetriebe nach einem der Ansprüche 1-10, dadurch gekennzeichnet, daß der Federbügel (4) einerseits an wenigstens einem Abstützorgan (5) der Kurbel (1), anderseits an wenigstens einem Abstützorgan (5) des Kettenrades (2) abgestützt bzw. abstützbar angeordnet ist.

12. Tretkurbelgetriebe nach einem der Ansprüche 1-11, dadurch gekennzeichnet, daß der Federbügel (4) an wenigstens einem Abstützorgan (5) mit konvex ausgebildeter, vorzugsweise im wesentlichen bogenförmiger Abstützfläche (6) abgestützt bzw. abstützbar angeordnet ist.

13. Tretkurbelgetriebe nach einem der Ansprüche 1-12, dadurch gekennzeichnet, daß der Federbügel (4) aus Rundmaterial oder Bandmaterial, gegebenenfalls aus geformtem Rund- oder Bandmaterial besteht.

14. Tretkurbelgetriebe nach einem der Ansprüche 1-13, dadurch gekennzeichnet, daß der Federbügel (4) unterschiedlich breite und/oder dicke, vorzugsweise konisch ausgebildete Zonen aufweist.

15. Tretkurbelgetriebe nach einem der Ansprüche 1-14, dadurch gekennzeichnet, daß der Federbügel (4) an wenigstens einer Abstützfläche (6) abgestützt bzw. abstützbar angeordnet ist, die aus härterem Material besteht als die Kurbel (1) bzw. das Kettenrad (2).

16. Tretkurbelgetriebe nach einem der Ansprüche 1-15, dadurch gekennzeichnet, daß das Abstützorgan (5) im wesentlichen wenigstens eine gekrümmte Feder mit konvexer Abstützfläche (6) ist.

0213115

FIG. 3

FIG. 4

0213115

FIG.5

FIG. 6

FIG.7

FIG.8

# EUROPÄISCHER RECHERCHENBERICHT

0213115
Nummer der Anmeldung

| EINSCHLÄGIGE DOKUMENTE | | | EP 86890227.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | FR - E - 12 170 (GUILLEMAIN)<br>* Fig. 1 *<br>-- | 1,3,4,<br>10,11 | B 62 M 1/10 |
| A | FR - A - 400 100 (GUILLEMAIN)<br>* Fig. 1 *<br>-- | 1,4,10,<br>11 | |
| A | FR - A - 867 861 (SEGAY)<br>* Fig. 4 *<br>-- | 1,3,4,<br>9,11 | |
| A | GB - A - 232 424 (PAYNE)<br>* Fig. 1 *<br>---- | 1 | |
| | | | RECHERCHIERTE SACHGEBIETE (Int. Cl 4) |
| | | | B 62 M<br>F 16 H |

Der vorliegende Recherchenbericht wurde für alle Patentansprüche erstellt.

| Recherchenort | Abschlußdatum der Recherche | Prüfer |
|---|---|---|
| WIEN | 11-11-1986 | BAUMGARTNER |